# EUROPEAN PATENT APPLICATION

(11) **EP 4 442 525 A1**
(43) Date of publication of application: **09.10.2024**
(21) Application number: 24168266.5
(22) Date of filing: 03.04.2024
(51) Int. Cl.: B60W 30/14, A01D 69/02, A01D 34/66

(54) **RIDING LAWNMOWER**

(30) Priority: 04.04.2023 JP 2023060898
(71) Applicant: ISEKI & CO., LTD., Matsuyama-shi Ehime-ken 799-2692 (JP)
(72) Inventor: SUZUKI, Hiroto, Ehime-ken, 791-2193 (JP); MIYAKE, Koki, Ehime-ken, 791-2193 (JP); WATANABE, Tomoaki, Ehime-ken, 791-2193 (JP); MASUDA, Ryutaro, Ehime-ken, 791-2193 (JP)
(74) Representative: TBK

(57) **Abstract**

Provided is a riding lawn mower having good operability while securing safety even in backward movement traveling. In a riding lawn mower including a working machine 4 provided on a traveling vehicle body 1 and a forward and backward movement detection unit 94 configured to detect a forward movement operation or a backward movement operation of the traveling vehicle body 1. A control unit 100 is provided with a backward movement vehicle speed limit mode for limiting a vehicle speed when the working machine 4 is driven and the backward movement operation is detected. A traveling motor 30 that drives drive wheels 3 of the traveling vehicle body 1 is provided. The vehicle speed is limited by limiting a rotational speed of the traveling motor 30 to a predetermined value or less when the vehicle speed is limited in the backward movement vehicle speed limit mode. A vehicle speed limit release switch 105 configured to disable the backward movement vehicle speed limit mode is provided. The control unit 100 includes an acceleration value control unit configured to release a limit of the vehicle speed when the vehicle speed is limited in the backward movement vehicle speed limit mode and the vehicle speed limit release switch 105 is operated and control the vehicle speed so that an acceleration value does not exceed a certain value.

## Description

### BACKGROUND OF THE INVENTION

### 1. Field of the Invention

The present invention relates to a riding lawn mower that travels through a park or the like to mow lawns in the park.

### 2. Description of Related Art

There is known a riding lawn mower including a lawn mowing device below a traveling vehicle body, a PTO clutch for switching on and off power transmission to the lawn mowing device, and a switch for stopping an engine when a backward movement operation is performed with the PTO clutch engaged to restrict work during a backward movement and temporarily disabling work restriction during the backward movement (PTL 1).

### Citation List

### Patent Literature

PTL 1: JP2020-96558A

### SUMMARY OF THE INVENTION

According to the configuration of PTL 1, since the engine is stopped when the vehicle is operated on a backward movement side during PTO rotation, backward movement work can be prevented in advance, which is safe. In addition, by providing an engine stop mode release switch during a backward movement, it is possible to perform the backward movement work, and by requiring a switch operation, operator recognition can be promoted and safety can be secured.

However, in the above technique, since the engine is stopped, it is necessary to restart the engine in order to return, and operability is not good.

An object of the invention is to provide a riding lawn mower having good operability while securing safety.

In order to solve the above problem, the invention according to claim 1 provides a riding lawn mower including: a working machine (4) provided on a traveling vehicle body (1); and a forward and backward movement detection unit (94) configured to detect a forward movement operation or a backward movement operation of the traveling vehicle body (1). A control unit (100) is provided with a backward movement vehicle speed limit mode for limiting a vehicle speed when the working machine (4) is driven and the backward movement operation is detected.

In the invention described in claim 2 related to the riding lawn mower according to claim 1, the traveling vehicle body (1) includes a working motor (40) that drives the working machine (4) and a traveling motor (30) that drives a drive wheel (3). The control unit (100) switches to the backward movement vehicle speed limit mode when the backward movement operation is detected during the driving of the working motor (40), and limits the vehicle speed by limiting a rotational speed of the traveling motor (30) to a predetermined value or less when the vehicle speed is limited in the backward movement vehicle speed limit mode.

In the invention described in claim 3 related to the riding lawn mower according to claim 1 or 2, the riding lawn mower further includes: a vehicle speed limit release switch (105) configured to disable the backward movement vehicle speed limit mode.

In the invention described in claim 4 related to the riding lawn mower according to claim 1, the control unit (100) includes an acceleration value control unit configured to release a limit of the vehicle speed when the vehicle speed is limited in the backward movement vehicle speed limit mode and the vehicle speed limit release switch (105) is operated and control the vehicle speed so that an acceleration value does not exceed a certain value.

In the invention described in claim 5 related to the riding lawn mower according to any one of claims 1 to 4, the riding lawn mower further includes: a PTO switch (103) configured to operate the driving of the working machine (4). The control unit (100) does not drive the working machine (4) even when the working machine (4) is stopped and the PTO switch (103) is operated during a backward movement.

According to the invention described in claim 1, the vehicle speed is limited to a predetermined value or less when an operation of moving the traveling vehicle body (1) backward is detected, and thus the vehicle can travel safely when moving backward while the working machine (4) is driven. Although the vehicle speed is limited, the vehicle body (1) moves while the working machine (4) does not stop, and thus work can be continued without impairing operability.

According to the invention described in claim 2, in addition to the effect described in claim 1, the vehicle speed is limited by control of the traveling motor (30), and thus the vehicle can travel safely when moving backward while the working machine (4) is driven.

According to the invention described in claim 3, in addition to the effect according to claim 1, since a vehicle speed limit can be released even during a backward movement, convenience is improved.

According to the invention described in claim 4, in addition to the effect according to claim 2, a rapid acceleration is prevented and safety is achieved by limiting the acceleration value.

According to the invention described in claim 5, in addition to the effect of the invention according to claim 1, it is possible to prevent the working machine (4) from being driven while traveling at a high speed, which is safe.

### BRIEF DESCRIPTION OF THE DRAWINGS

FIG. 1 is a left side view of a riding lawn mower according to an embodiment of the invention;
FIG. 2 is a left side view of a working vehicle with a bonnet cover in an open position according to the embodiment of the invention;
FIG. 3 is a partially cutaway perspective view of main parts of the riding lawn mower according to the embodiment of the invention;
FIG. 4 is a rear view of the riding lawn mower according to the embodiment of the invention;
FIG. 5 is a plan view of main parts of rear wheels and a working machine according to the embodiment of the invention;
FIG. 6 is a left side view of main parts of the rear wheel and the working machine according to the embodiment of the invention;
FIG. 7 is a left side view of a rear wheel electric motor and a working machine electric motor according to the embodiment of the invention;
FIG. 8 is a perspective view of a traveling vehicle body according to the embodiment of the invention;
FIG. 9 is a perspective view of a steering post according to the embodiment of the invention;
FIG. 10 is a perspective view of a battery and a battery bracket according to the embodiment of the invention;
FIG. 11 is a perspective view of the battery bracket according to the embodiment of the invention;
FIG. 12 is a front view of front wheels, the battery, and the battery bracket according to the embodiment of the invention;
FIG. 13 is a partially cutaway plan view of main parts of the riding lawn mower according to the embodiment of the invention;
FIG. 14 is a perspective view of electrical components according to the embodiment of the invention;
FIG. 15 is a perspective view of the electrical components provided below an operator seat according to the embodiment of the invention;
FIG. 16 is a perspective view of a forward and backward movement accelerator pedal according to the embodiment of the invention;
FIG. 17A is a graph showing a relationship between accelerator pedal sensor detection and forward and backward movement states according to the embodiment of the invention, and FIG. 17B is a graph of an example of a relationship between a forward and backward movement accelerator pedal operation amount and a PWM duty ratio according to the embodiment of the invention;
FIG. 18A is a brake-related plan view according to the embodiment of the invention, and FIG. 18B is a side view thereof; and
FIGS. 19A and 19B are control block diagrams according to the embodiment of the invention.

### DESCRIPTION OF EMBODIMENTS

Hereinafter, an embodiment according to the invention will be described in detail with reference to the drawings.

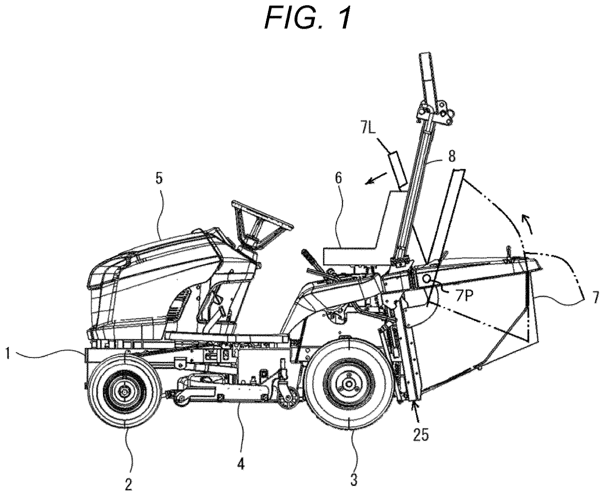

As shown in FIG. 1, a riding lawn mower includes a traveling vehicle body 1, a pair of left and right front wheels 2 provided on a front portion of the traveling vehicle body 1, a pair of left and right rear wheels 3 provided on a rear portion of the traveling vehicle body 1, and a working machine 4 for mowing lawns between the front wheels 2 and the rear wheels 3 provided on a lower side of the traveling vehicle body 1. In addition, a bonnet portion 5 is provided at an upper front portion of the traveling vehicle body 1, an operation portion 6 on which an operator rides is provided at a rear side of the bonnet portion 5, a safety frame (ROPS) 8 for protecting the operator is provided at a rear side of the operation portion 6, and a grass collecting container 7 for storing lawns or the like mowed by the working machine 4 is provided at a lower portion of the safety frame 8.

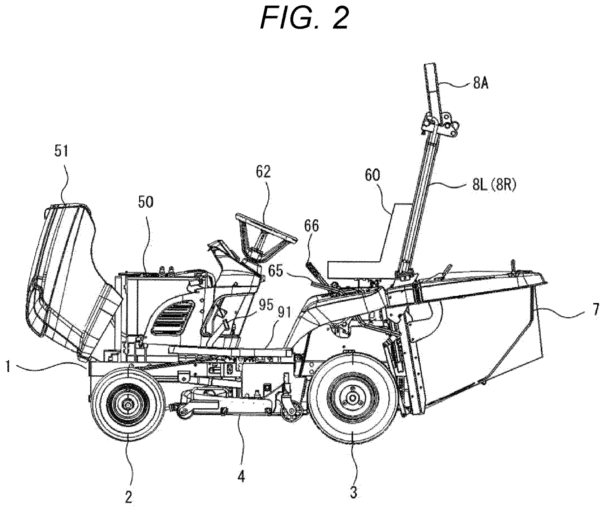

As shown in FIGS. 2 to 4, the bonnet portion 5 is provided with a battery 50 that stores electric power to be supplied to an electric motor 30 and the like that drive the rear wheels 3, and the battery 50 is covered with a bonnet cover 51. The bonnet cover 51 is supported by a support shaft (not shown) provided at the front portion of the traveling vehicle body 1 and extending in a left-right direction. Accordingly, a space formed in the bonnet portion 5 can be effectively utilized.

An electrical component 61 is provided on a lower side of an operator seat 60 of the operation portion 6. Accordingly, a space formed on the lower side of the operator seat 60 can be effectively utilized.

The safety frame 8 includes a left support portion 8L extending in an up-down direction, a right support portion 8R extending in the up-down direction, and an inverted U-shaped coupling portion 8A coupling upper portions of the left support portion 8L and the right support portion 8R.

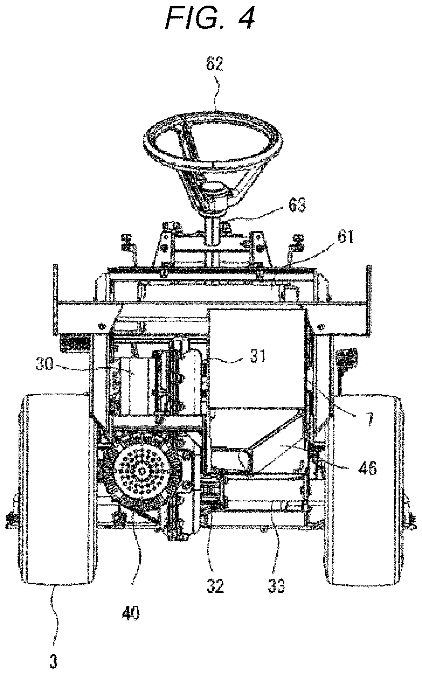

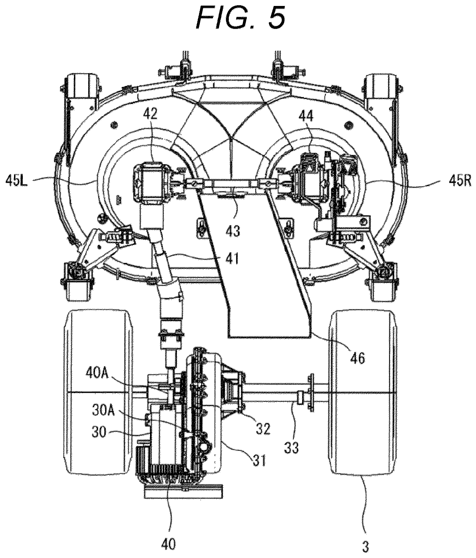

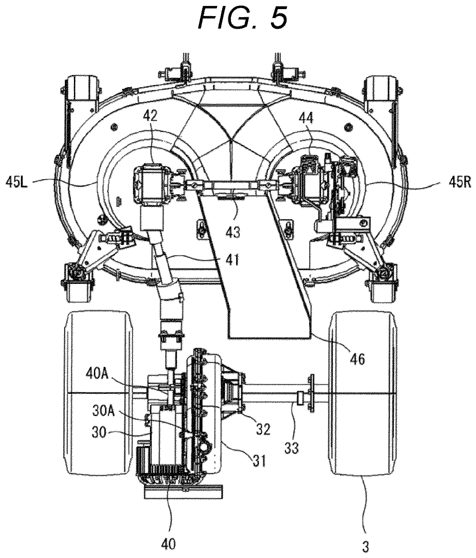

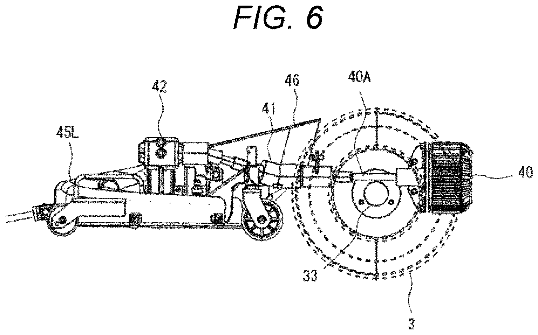

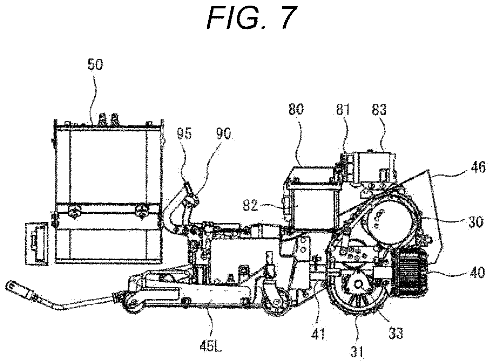

As shown in FIGS. 4 to 7, the electric motor 30 such as a synchronous electric motor or an induction electric motor operated by a three-phase AC voltage waveform for driving the rear wheels 3 is provided on a lower side of the electrical component 61. An output shaft 30A formed to extend in the left-right direction of the electric motor 30 is coupled to an upper portion of a gear box 31 that decelerates output rotation transmitted from the output shaft 30A to increase an output torque or reverse a rotation direction. The electric motor 30 is provided at a position shifted to the left from a center in the left-right direction.

The output rotation accelerated and decelerated by the gear box 31 is transmitted to a drive shaft 33 extending in the left-right direction via a differential gear 32 provided at a lower portion of the gear box 31 and formed by a differential gear or the like. The output rotation transmitted to the drive shaft 33 is transmitted to the rear wheels 3 supported by both ends of the drive shaft 33.

On a lower side of the electric motor 30, an electric motor 40 such as a synchronous electric motor or an induction electric motor operated by the three-phase AC voltage waveform for driving the working machine 4 is provided. An output shaft 40A formed to extend in a front-rear direction of the electric motor 40 is coupled to a rear portion of a universal joint 41 provided to extend in the front-rear direction. The output shaft 40A is provided above the drive shaft 33 so as to be orthogonal to the drive shaft 33. Accordingly, a space formed on the lower side of the electric motor 30 can be effectively utilized. In addition, since a power transmission path between the electric motor 40 and the working machine 4 can be shortened, the output rotation of the electric motor 40 can be efficiently transmitted to the working machine 4. The electric motor 40 is provided at a position shifted to the left from the center in the left-right direction.

A front portion of the universal joint 41 is coupled to a gear box 42 that decelerates the output rotation transmitted from the universal joint 41 to increase the output torque. The output rotation transmitted to the gear box 42 is transmitted to a left cutting blade (not shown) provided in a left discharge passage 45L of the working machine 4 via an output shaft formed to extend in the up-down direction of the gear box 42.

A coupling member 43 extending in the left-right direction is coupled to the gear box 42, and a right portion of the coupling member 43 is coupled to a gear box 44. The output rotation transmitted to the gear box 44 is transmitted to a right cutting blade (not shown) provided in a right discharge passage 45R of the working machine 4 via an output shaft formed to extend in the up-down direction of the gear box 44. Rotation speeds of the output rotations of the output shaft of the gear box 42 and the output shaft of the gear box 44 are the same, and rotation directions are opposite to each other, that is, the output shaft of the gear box 42 rotates clockwise and the output shaft of the gear box 44 rotates counterclockwise in a plan view.

An outlet of the left discharge passage 45L and an outlet of the right discharge passage 45R are coupled to an inlet of a chute 46 that conveys the mowed lawns or the like to the grass collecting container 7. An outlet of the chute 46 is connected to an inlet of the grass collecting container 7.

In a plan view, a front portion of the chute 46 is provided on the right side of the universal joint 41, and a rear portion of the chute 46 is provided on the right side of the gear box 31. In a rear view, the chute 46 and the grass collecting container 7 are provided between the gear box 31 and the right rear wheel 3. Accordingly, the large chute 46 can be provided in a space formed on the right side of the universal joint 41 and the gear box 31, and the lawns or the like mowed by the working machine 4 can be efficiently conveyed to the grass collecting container 7.

In a side view, an upper wall of the chute 46 is formed to be inclined upward at the rear, and the rear portion of the chute 46 is provided to extend downward below the electrical component 61. Accordingly, by enlarging the rear portion of the chute 46, the inside of the chute 46 can be prevented from being clogged with lawns or the like.

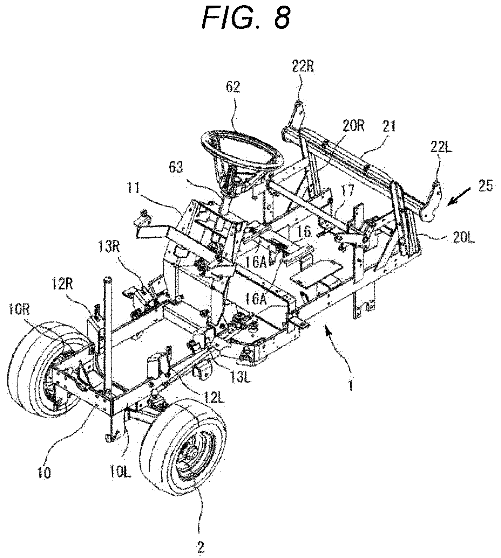

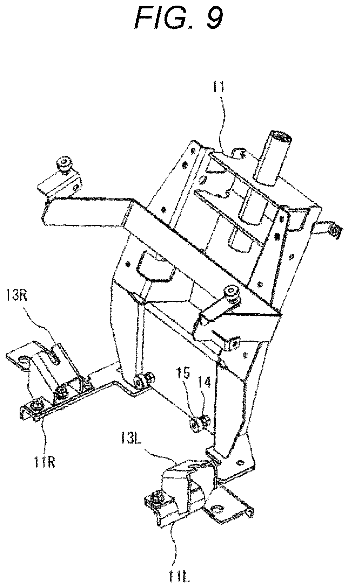

As shown in FIGS. 8 and 9, the traveling vehicle body 1 includes a traveling vehicle body main body 10 that supports the front wheels 2 and the rear wheels 3, and a steering post 11 that supports a steering shaft 63.

A left front-rear frame 10L and a right front-rear frame 10R extending in the front-rear direction are formed in the traveling vehicle body main body 10, and a left coupling portion 11L and a right coupling portion 11R extending forward are formed in a lower portion of the steering post 11.

The left coupling portion 11L is fixed to the left front-rear frame 10L by a fastening unit such as a bolt, and the right coupling portion 11R is fixed to the right front-rear frame 10R by a fastening unit such as a bolt, thereby integrally forming the traveling vehicle body 1.

A left support member 12L is provided at a front portion of the left front-rear frame 10L, and a coupling portion of the left support member 12L is formed to be inclined upward to the left. A right support member 12R is provided at a front portion of the right front-rear frame 10R, and a coupling portion of the right support member 12R is formed to be inclined upward to the right. The left support member 12L and the right support member 12R are made of channel steel.

A left support member 13L is provided at a front portion of the left coupling portion 11L, and a coupling portion of the left support member 13L is formed to be inclined upward to the left. A right support member 13R is provided at a front portion of the right coupling portion 11R, and a coupling portion of the right support member 13R is formed to be inclined upward to the right. The left support member 13L and the right support member 13R are made of channel steel.

Protrusions 14 are formed at the lower portion of the steering post 11 and protrude forward at a predetermined interval in the left-right direction, and buffer members 15 made of a rubber member or the like are provided at tip ends of the protrusions 14.

A left up-down frame 20L extending upward is provided at a rear portion of the left front-rear frame 10L, and a right up-down frame 20R extending upward is provided at a rear portion of the right front-rear frame 10R, and upper portions of the left up-down frame 20L and the right up-down frame 20R are coupled to a left-right frame 21 extending in the left-right direction.

A left coupling portion 22L to which a lower portion of the left support portion 8L of the safety frame 8 is coupled is provided at a left portion of the left-right frame 21, and a right coupling portion 22R to which a lower portion of the right support portion 8R of the safety frame 8 is coupled is provided at a right portion of the left-right frame 21.

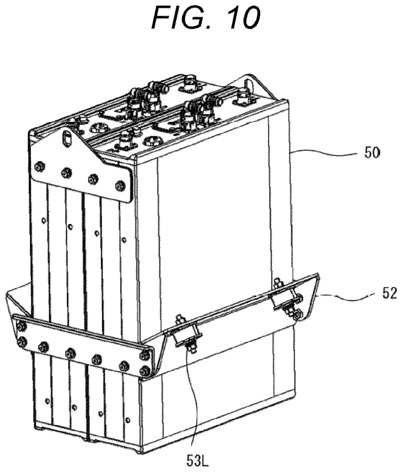

As shown in FIG. 10, a lower portion of the battery 50 provided in the bonnet portion 5 is fitted into an inner peripheral portion of a battery bracket 52. The battery 50 is formed by connecting a plurality of lithium ion batteries having high energy densities in series and in parallel. Accordingly, the space formed in the bonnet portion 5 can be effectively utilized. Since the lithium ion battery has a high energy density, a working vehicle can travel a long distance by one full charge.

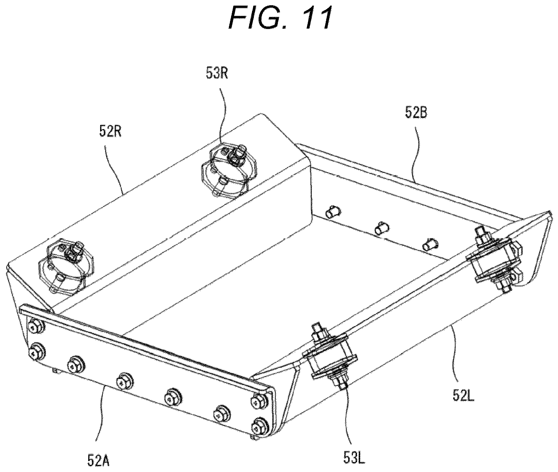

As shown in FIG. 11, the battery bracket 52 includes a left front-rear frame 52L and a right front-rear frame 52R extending in the front-rear direction, a front left-right frame 52A coupling front portions of the left front-rear frame 52L and the right front-rear frame 52R, and a rear left-right frame 52B coupling rear portions of the left front-rear frame 52L and the right front-rear frame 52R. The left front-rear frame 52L and the right front-rear frame 52R are formed of angle steel, and the front left-right frame 52A and the rear left-right frame 52B are formed of channel steel.

A coupling portion of the left front-rear frame 52L is formed to be inclined upward to the left, and a coupling portion of the right front-rear frame 52R is formed to be inclined upward to the right. In a rear view, the left upward inclinations of the coupling portion of the left support member 13L, the coupling portion of the left support member 12L, and the coupling portion of the left front-rear frame 52L are formed at the same inclination angle, and the right upward inclinations of the coupling portion of the right support member 13R, the coupling portion of the right support member 12R, and the coupling portion of the right front-rear frame 52R are formed at the same inclination angle.

A lower surface of the coupling portion of the left front-rear frame 52L is provided with round left anti-vibration members 53L at a predetermined interval in the front-rear direction, and a lower surface of the coupling portion of the right front-rear frame 52R is provided with round right anti-vibration members 53R at a predetermined interval in the front-rear direction.

The left front-rear frame 52L is coupled to the left support member 12L of the left front-rear frame 10L and the left support member 13L of the left coupling portion 11L via the left anti-vibration members 53L, and the right front-rear frame 52R is coupled to the right support member 12R of the right front-rear frame 10R and the right support member 13R of the right coupling portion 11R via the right anti-vibration members 53R. Accordingly, it is possible to prevent the vibration of the traveling vehicle body main body 10 generated when the working vehicle is traveling from being transmitted to the battery 50, and to prevent damage or the like of the battery 50.

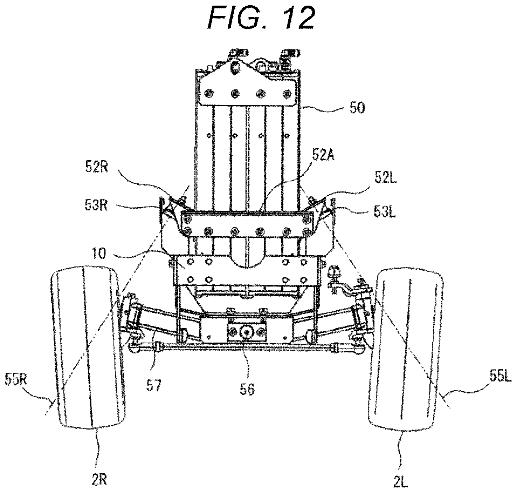

As shown in FIG. 12, the coupling portion of the left front-rear frame 52L is provided orthogonal to a left imaginary line 55L connecting a center of the left anti-vibration member 53L and a center of the left front wheel 2L on the left side. The coupling portion of the right front-rear frame 52R is orthogonal to a right imaginary line 55R connecting a center of the right anti-vibration member 53R and a center of the right front wheel 2R on the right side. Accordingly, it is possible to prevent a large vibration caused by unevenness of a traveling surface through the front wheels 2 and the rear wheels 3, and to prevent damage or the like of the battery 50. A reference numeral 57 denotes a front wheel support frame that supports the left and right front wheels 2, and a reference numeral 56 denotes a coupling portion between the front wheel support frame and the traveling vehicle body main body 10, and denotes a swing axis of the front wheel support frame. Tip ends of the buffer members 15 of the steering post 11 are pressed against a rear surface of the rear left-right frame 52B of the battery bracket 52. Accordingly, a rearward movement of the battery 50 at the time of starting of the traveling vehicle body 1 can be prevented, and damage or the like of the battery 50 can be prevented.

A frame structure constituted by the left up-down frame 20L, the right up-down frame 20R, and the left-right frame 21 constitutes a support frame 25 of the grass collecting container 7. The grass collecting container 7 is coupled to the support frame 25. That is, the grass collecting container 7 is coupled to fulcrum pins 7P at a front upper portion of the grass collecting container 7 so as to be pivotable up and down around the fulcrum pins 7P. Therefore, as shown in FIG. 1, a posture of the grass collecting container 7 can be changed between a working posture in which a front surface of the grass collecting container 7 is brought into contact with a shielding plate portion (not shown) surrounded by the support frame 25 and a mowed lawn dispensing posture in which a rear portion of the grass collecting container 7 is bounced up. A known pivot handle 7L is provided on a right side of the grass collecting container 7, and by gripping a grip portion at an upper end and tilting it forward, it is possible to change to the mowed lawn dispensing posture of a non-working posture. In this case, the stored lawns are discharged to the ground from an open portion at the front.

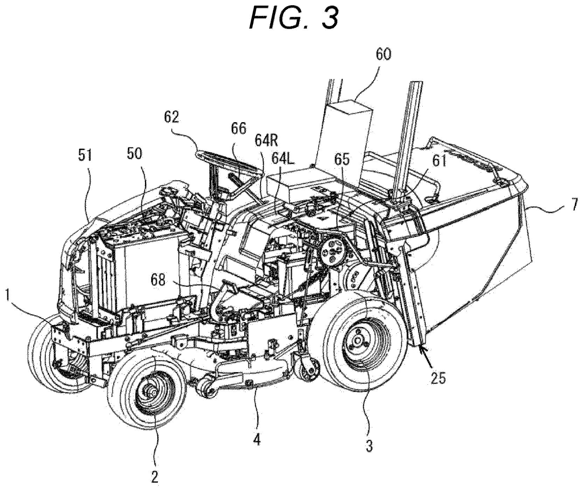

As shown in FIGS. 2 and 3, a steering wheel 62 is provided on the front side of the operator seat 60 of the operation portion 6, and the steering wheel 62 is supported on an upper portion of the steering shaft 63 extending in the up-down direction.

A left fender 64L on the left side of the operator seat 60 is provided with a cleaner lever 65 for, for example, operating conveying of the mowed lawns remaining in the chute 46 to the grass collecting container 7 on the rear side, and a right fender 64R on the right side of the operator seat 60 is provided with an operation lever 66 for operating an elevation layer of the working machine 4. In addition, a brake pedal 68 is provided at a left front portion of a floor 67 on which the operator places a foot during operation, and a forward movement accelerator pedal 90 and a backward movement accelerator pedal 93 are provided in parallel at a right front portion.

The electrical component 61 provided in a space formed between the chute 46 of the working machine 4 and the operator seat 60 includes an inverter device 80 that converts a DC voltage supplied from the battery 50 into an AC voltage to generate a three-phase AC voltage waveform for operating the electric motor 30 and the like, a battery monitoring device 81 that monitors a temperature, a charging state, voltage protection, and each cell short-circuit state of the battery 50, an auxiliary battery 82 such as a lead battery that stores a battery to be supplied to a meter panel that is provided on the front side of the operator seat 60 and displays a traveling speed and the like, and a converter device 83 that changes the DC voltage supplied from the battery 50 into a DC voltage to be supplied to a sensor that detects an operation position of the cleaner lever 65 and the like.

The inverter device 80 includes an inverter device 84 for operating the electric motor 30 and an inverter device 85 for operating the electric motor 40. The inverter device 84 also functions as a charging device that charges the battery 50 with the electric power supplied from the electric motor 30 to the inverter device 80 when a regenerative brake is in operation, that is, when the forward movement accelerator pedal 90 or the backward movement accelerator pedal 93 is released, the output shaft 30A is rotated by an inertial force of the traveling vehicle body 1, and the electric motor 30 operates as a generator.

Similarly, when a PTO switch 103 to be described later is switched to OFF, the output shaft 40A is rotated by an inertial force of the left cutting blade and the right cutting blade, and the electric motor 40 operates as the generator. In this case as well, the regenerative brake is operated to stop the working machine 4, and the inverter device 85 functions as a charging device that charges the battery 50 with the electric power supplied from the electric motor 40 to the inverter device 80.

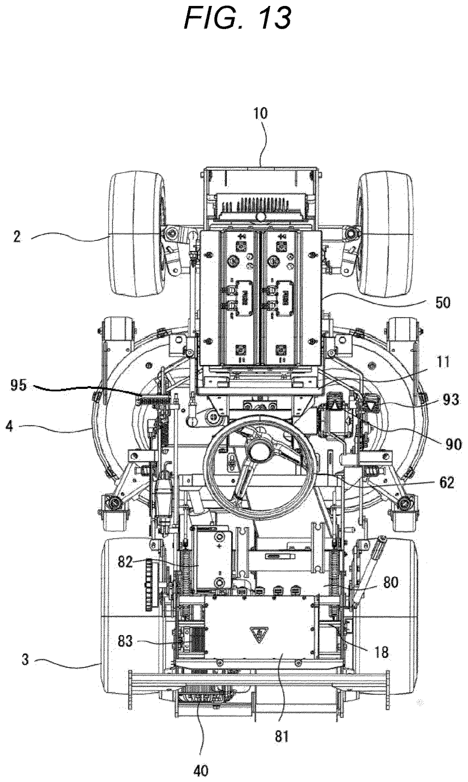

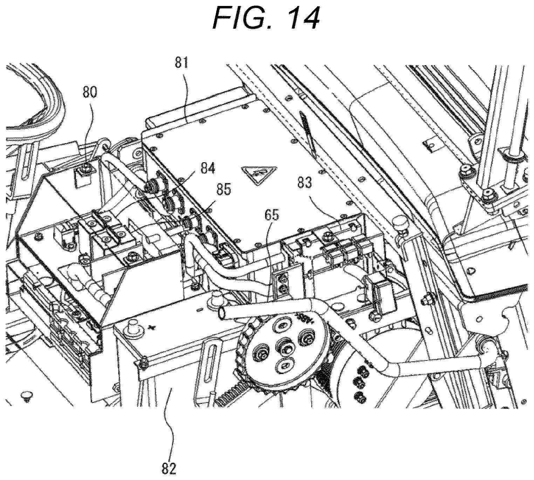

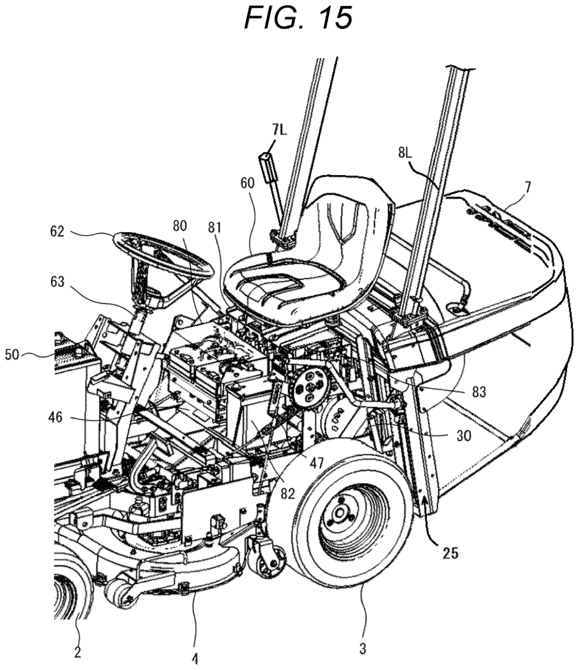

In a plan view, the inverter device 80 is provided at a front portion on the lower side of the operator seat 60, and the battery monitoring device 81 is provided on a rear side of the inverter device 80. The auxiliary battery 82 is provided on a left side of the inverter device 80, and the converter device 83 is provided on a left side of the battery monitoring device 81 and on a rear side of the auxiliary battery 82. Accordingly, the space formed on the lower side of the operator seat 60 can be effectively utilized. In addition, by providing the battery monitoring device 81 having a heavy weight on the rear side, it is possible to reduce a difference in weight applied to the front portion and the rear portion of the traveling vehicle body main body 10 and improve traveling stability performance (see FIGS. 13, 14, and 15).

The battery monitoring device 81 is provided with units for monitoring a remaining amount. When the remaining amount reaches less than a predetermined amount, first, a drive command to the working machine electric motor 40 is stopped. As a result, only an output of the traveling electric motor 30 is generated, and the work is interrupted, but a movement for battery charging work is not hindered.

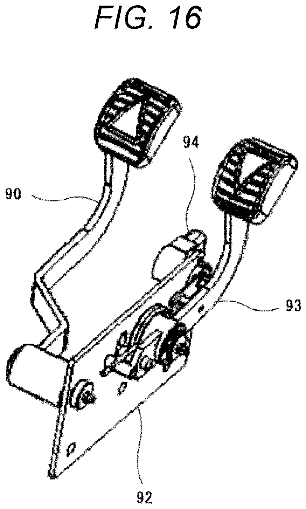

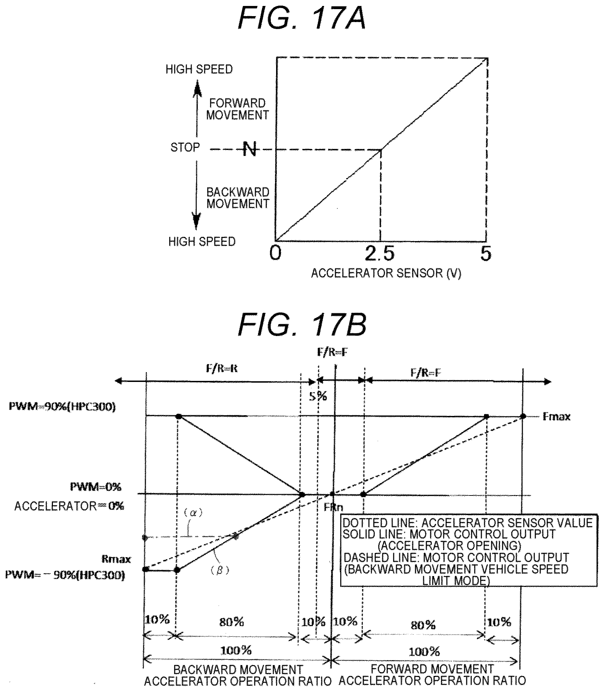

As shown in FIG. 16, a base portion of the forward movement accelerator pedal 90 is rotatably supported by a support shaft extending in the left-right direction provided at a rear portion of a support member 92 provided upright at a right front portion of a floor 91, and a base portion of the backward movement accelerator pedal 93 is rotatably supported by a support shaft extending in the left-right direction provided at an intermediate portion of the support member 92 in the front-rear direction. A rotation angle of the forward movement accelerator pedal 90 corresponding to a depression amount of the forward movement accelerator pedal 90 and a rotation angle of the backward movement accelerator pedal 93 corresponding to a depression amount of the backward movement accelerator pedal 93 are measured by an accelerator pedal sensor 94 such as a potentiometer provided in the front portion of the support member 92. That is, the accelerator pedal sensor 94 has a function as a forward and backward movement detection unit for detecting a forward movement operation or a backward movement operation of the traveling vehicle body 1. Therefore, a relationship between a magnitude detection value of the accelerator pedal sensor 94 and forward movement, stop, backward movement, and high and low speed is as shown in FIG. 17A, and both ends of a voltage range of the accelerator pedal sensor 94 are set to most depressed positions (high speed) of the forward movement accelerator pedal 90 and the backward movement accelerator pedal 93, and a center of the voltage range is set to neutral.

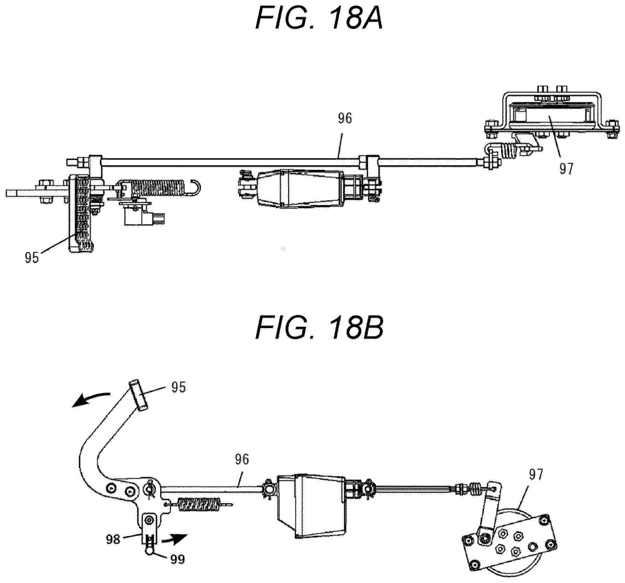

As shown in FIGS. 18A and 18B, a brake pedal 95 is provided on the floor 91, and a front end of a brake rod 96 is coupled thereto. A rear end of the brake rod 96 is coupled to a brake 97 provided on the rear wheel 3. When the brake pedal 95 is depressed, the brake pedal 95 rotates counterclockwise about a support shaft 95A extending in the left-right direction to move the brake rod 96 forward to operate the brake 97. A brake pedal sensor 99 such as a potentiometer capable of measuring a rotation angle of the brake pedal 95 is provided on a bracket 98 that pivots integrally with the brake pedal 95 around the support shaft 95A.

A rotation angle measured by the accelerator pedal sensor 94 serving as the forward and backward movement detection unit for detecting the forward movement operation or the backward movement operation of the traveling vehicle body 1 is transmitted to the inverter device 80. Accordingly, in the inverter device 80, a frequency and an amplitude of the three-phase AC voltage waveform are increased or decreased according to the transmitted rotation angle, and the output rotation of the output shaft 30A of the electric motor 30 can be accelerated or decelerated.

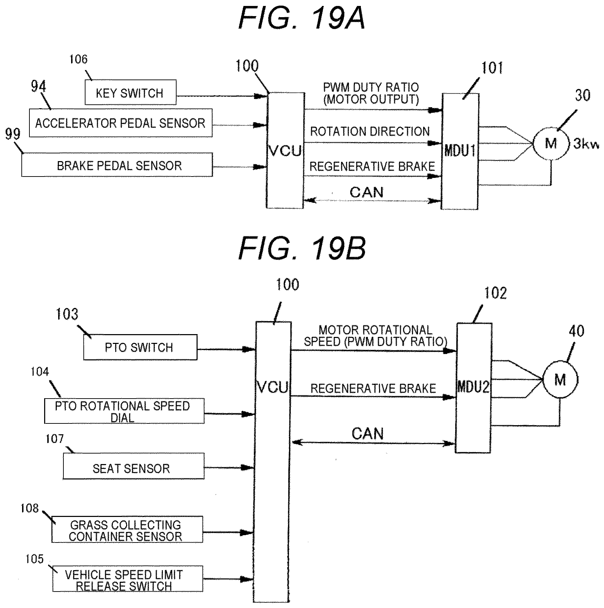

Next, a control unit 100 of the electric motor 30 for driving the rear wheels 3 (hereinafter, referred to as the traveling electric motor 30) and the electric motor 40 for driving the working machine 4 (hereinafter, referred to as the working machine electric motor 40) will be described. As shown in a block diagram of FIG. 19A, the traveling electric motor 30 is controlled through the control unit (VCU) 100 and a traveling electric motor driver unit (MDU1) 101 which are connected to each other so as to be able to exchange information with each other by CAN communication, and is controlled to rotate based on an output of an inverter signal to the inverter device 84. Signals from the accelerator pedal sensor 94 and the brake pedal sensor 99 are input to the control unit 100, and a rotational speed output whose magnitude is adjusted by a PWM duty ratio calculated by calculation based on the depression amount of the forward movement accelerator pedal 90 or the backward movement accelerator pedal 93 is transmitted. FIG. 17B shows an example of an output value of the accelerator pedal sensor 94 based on a depression operation of the forward movement accelerator pedal 90 and the backward movement accelerator pedal 93 and the PWM duty ratio based on the calculation, and in addition to a basic configuration in which forward and backward ranges (for example, 10%) of the forward movement accelerator pedal 90 and the backward movement accelerator pedal 93 are dead zones, a position slightly shifted to a backward movement side (for example, 5%) from a neutral position of the accelerator pedal sensor 94 is set as a switching position between the forward movement accelerator pedal 90 and the backward movement accelerator pedal 93, or the PWM duty ratio of a traveling motor is set to 0% for a certain period of time at the time of switching between the forward movement and the backward movement, thereby improving safety.

Meanwhile, the working machine electric motor 40 is controlled through the control unit (VCU) 100 and a working machine electric motor driver unit (MDU2) 102 which are connected to each other so as to be able to exchange information with each other by CAN communication, and thus is controlled to rotate based on the output of the inverter signal to the inverter device 84 (FIG. 19B). The control unit 100 receives a signal from the PTO switch 103 to control ON/OFF the working machine electric motor 40.

A PTO rotational speed dial 104 is connected to the control unit 100, and a predetermined rotational speed command signal is output with the PWM duty ratio according to the setting of the dial 104.

Next, a backward movement vehicle speed limit mode will be described. When the PTO switch 103 is turned on, the control unit 100 activates the working machine electric motor 40 at a predetermined rotation to rotationally drive the cutting blade of the working machine 4 for mowing lawns. Further, by operating the forward movement accelerator pedal 90, the vehicle body can mow lawns while moving forward at a predetermined speed. When the traveling vehicle body 1 is temporarily stopped during the work and the traveling vehicle body 1 is moved backward by operating the backward movement accelerator pedal 93, the control unit 100 limits a backward traveling vehicle speed. That is, while transmitting a predetermined rotational speed output to the working machine electric motor 40, when the rotational speed output based on the depression amount of the backward movement accelerator pedal 93 is transmitted to the traveling electric motor 30, the rotational speed output limited so as not to exceed a predetermined rotational speed set in advance is transmitted. When the depression amount of the backward movement accelerator pedal 93 is equal to or less than the predetermined rotational speed set in advance, the rotation output can be performed according to the depression amount, whereas when the depression amount of the pedal exceeds the predetermined rotational speed, the output is limited to the predetermined rotational speed output. In FIG. 17B, a motor control output by a depression operation of the backward movement accelerator pedal 93 is limited to a certain value when the depression amount exceeds a predetermined depression amount, as indicated by a dashed line (α).

Therefore, when an operation to move the traveling vehicle body 1 backward is detected, the vehicle speed is limited to a predetermined value or less (backward movement vehicle speed limit mode is entered), and thus the vehicle can travel safely when moving backward while the working machine 4 is driven to mow lawns. In addition, since a vehicle body movement can be performed while the vehicle speed is limited and the working machine 4 does not stop, the lawns or the like mowed by the working machine 4 can be efficiently conveyed to the grass collecting container 7 through the chute 46, and the discharge of the lawns can be continued.

A vehicle speed limit release switch 105 for disabling the backward movement vehicle speed limit mode is provided. When the release switch 105 is operated, a vehicle speed limit is released, the backward movement vehicle speed limit mode enters a released state, and a backward movement vehicle speed is not limited. The state returns to a solid line (β) shown in FIG. 17B. The released state can also be achieved by operating the backward movement accelerator pedal 93 together with the release switch 105. In addition, safety is secured by providing a unit for monitoring an acceleration value of the vehicle speed by the operation of the backward movement accelerator pedal 93 during traveling when the vehicle speed limit is released and an acceleration value control unit for controlling the acceleration value not to exceed a certain value.

Further, once the vehicle enters the released state of the backward movement vehicle speed limit mode, the released state of the backward movement vehicle speed limit mode is maintained until a certain return condition is satisfied, and a method for returning to the mode entered state is as follows. First, depression of the forward movement accelerator pedal 90 may be detected. However, the return condition is not yet satisfied by only releasing the depression of the backward movement accelerator pedal 93. Second, the PTO switch 103 is turned off or a key switch 106 is turned off. Third, there is a case in which a cutting blade rotation condition is not satisfied, and is based on detection by a seat sensor 107 and a grass collecting container sensor 108, for example.

Here, the seat sensor 107 provided between the operator seat 60 and the vehicle body detects whether a passenger is seated, and outputs an OFF signal when the passenger leaves the seat. The grass collecting container sensor 108 is provided at a coupling portion between the main body and the grass collecting container 7, and is implemented to output the OFF signal when the grass collecting container 7 pivots about a fulcrum shaft by an operation of the pivot handle 7L. That is, a drive signal of the working machine electric motor 40 is output on conditions that all of an ON operation signal of the PTO switch 103, an ON signal of the seat sensor 107 for detecting a seating state, and an ON signal of the grass collecting container sensor 108 for detecting that the grass collecting container 7 is in a working posture are completed, thereby driving the working machine electric motor 40. Therefore, in addition to an OFF operation of the PTO switch 103, when an operator leaves the operator seat 60 or rotates the grass collecting container 7 to a non-working posture, an OFF signal is output and the drive signal is stopped.

Next, a backward movement working machine output limit mode will be described. That is, when the rotational speed output based on the depression amount of the backward movement accelerator pedal 93 is transmitted to the traveling electric motor 30, even if the PTO switch 103 is operated, the control unit 100 cannot rotate without transmitting the rotation output to the working machine electric motor 40. The working machine 4 is thus implemented not to be operated. In this way, even when the PTO switch 103 is turned on while the traveling vehicle body 1 is moving backward, the working machine electric motor 40 cannot be driven (backward movement working machine output limit mode), and thus it is possible to avoid danger. For example, when the working machine electric motor 40 is driven during the backward movement, there is a chance that a lawn mowing working machine may be driven in a high-speed traveling state by inertia, or there is a risk that the backward movement vehicle speed limit mode is activated to cause sudden braking. By implementing the working machine electric motor 40 so that it cannot be driven as described above, these dangers can be prevented.

In the riding lawn mower according to the above-described embodiment, the traveling electric motor 30 and the working machine electric motor 40 are provided as the motor, but an engine may be provided instead of the electric motor 30 and/or the electric motor 40.

## Claims

1. A riding lawn mower comprising:
a working machine (4) provided on a traveling vehicle body (1); and
a forward and backward movement detection unit (94) configured to detect a forward movement operation or a backward movement operation of the traveling vehicle body (1), wherein
a control unit (100) is provided with a backward movement vehicle speed limit mode for limiting a vehicle speed when the working machine (4) is driven and the backward movement operation is detected.

2. The riding lawn mower according to claim 1, wherein
the traveling vehicle body (1) includes a working motor (40) that drives the working machine (4) and a traveling motor (30) that drives a drive wheel (3), and
the control unit (100)
switches to the backward movement vehicle speed limit mode when the backward movement operation is detected during the driving of the working motor (40), and
limits the vehicle speed by limiting a rotational speed of the traveling motor (30) to a predetermined value or less when the vehicle speed is limited in the backward movement vehicle speed limit mode.

3. The riding lawn mower according to claim 1 or 2, further comprising:
a vehicle speed limit release switch (105) configured to disable the backward movement vehicle speed limit mode.

4. The riding lawn mower according to claim 3, wherein
the control unit (100) includes an acceleration value control unit configured to release a limit of the vehicle speed when the vehicle speed is limited in the backward movement vehicle speed limit mode and the vehicle speed limit release switch (105) is operated and control the vehicle speed so that an acceleration value does not exceed a certain value.

5. The riding lawn mower according to any one of claims 1 to 4, further comprising:
a PTO switch (103) configured to operate the driving of the working machine (4), wherein
the control unit (100) does not drive the working machine (4) even when the working machine (4) is stopped and the PTO switch (103) is operated during a backward movement.
